(19) Europäisches Patentamt
European Patent Office
Office européen des brevets

(11) **EP 1 481 329 B1**

(12) **EUROPÄISCHE PATENTSCHRIFT**

(45) Veröffentlichungstag und Bekanntmachung des Hinweises auf die Patenterteilung:
**30.05.2007 Patentblatt 2007/22**

(51) Int Cl.:
***G06F 13/32*** *(2006.01)*

(21) Anmeldenummer: 03704233.0

(22) Anmeldetag: **20.01.2003**

(86) Internationale Anmeldenummer:
**PCT/DE2003/000138**

(87) Internationale Veröffentlichungsnummer:
**WO 2003/073301 (04.09.2003 Gazette 2003/36)**

(54) **VERFAHREN ZUM ÜBERTRAGEN VON DATEN UEBER EINEN DATENBUS**

METHOD FOR TRANSFERRING DATA VIA A DATA BUS

PROCEDE DE TRANSMISSION DE DONNEES VIA UN BUS DE DONNEES

(84) Benannte Vertragsstaaten:
**DE ES FR GB IT SE**

(30) Priorität: **26.02.2002 DE 10208300**

(43) Veröffentlichungstag der Anmeldung:
**01.12.2004 Patentblatt 2004/49**

(73) Patentinhaber: **ROBERT BOSCH GMBH**
**70442 Stuttgart (DE)**

(72) Erfinder:
• **BARTHEL, Joerg**
**31139 Hildesheim (DE)**
• **BEHME, Dirk**
**31139 Hildesheim (DE)**

(56) Entgegenhaltungen:
**US-A- 5 758 182          US-A- 5 890 220**
**US-A1- 2001 029 556**

**Beschreibung**

Stand der Technik

Ein Standard Personal Computer (PC) zeichnet sich durch einfache Erweiterbarkeit aus, die beispielsweise über sogenannte Steckkarten erfolgen kann, die in Erweiterungssteckplätze auf der Hauptplatine eines PCs gesteckt werden. Im Laufe der Zeit hat sich für diese Erweiterungen der sogenannte PCI-Bus (PCI: Peripheral Component Interconnect) durchgesetzt. Dieser definiert neben den mechanischen und elektrischen Eigenschaften des Datenbusses auch die Konfiguration der Busmitglieder.

Aus der US Patentschrift 57 765 008 ist ein Computer mit einer Hauptplatine bekannt, bei der Steckplätze für Erweiterungskarten vorgesehen sind. Diese Karten sind über den PCI-Bus mit der Hauptplatine verbunden.

In einem der Steckplätze ist eine sogenannte "riser card" vorgesehen, die wiederum eine Anzahl von Einsteckmöglichkeiten zur Verfügung stellt. Auf diese Weise können eine Vielzahl von Steckkarten in die Hauptplatine eingesteckt und somit vielfältige Funktionen realisiert werden.

Jede PCI-Erweiterungskarte benötigt zur Anbindung an den PCI-Bus eine PCI-Schnittstelle bzw, ein PCI-Interface. Dies kann entweder ein spezieller eigenständiger integrierter Schaltkreis (PCI-Bridge) oder eine in einer Hardwarebeschreibungssprache implementierte PCI-Schnittstelle bzw. ein PCI-Interface (PCI-Core) sein. Letzteres kann mit zusätzlicher frei definierbarer Logik in programmierbare Logikbausteine, wie beispielsweise ein FGPA (FGPA: Field Programmable Gate Array), eingebettet werden.

Beide Varianten der Anbindung an den PCI-Bus erlauben die Entwicklung von Erweiterungskarten, die den PCI-Bus über diesen Schnittstellenbaustein an eine lokale, selbst definierbare Logik, beispielsweise einen lokalen proprietären Bus, anbindet. Bei Verwendung einer FGPAbasierten Lösung ist die lokale Logik absolut frei gestaltbar. Im Falle kommerzieller PCI-Bridges sind die lokalen Schnittstellen durch den Hersteller dieser Schaltkreise definiert.

Beim Starten des PCs ist es nach erfolgter Selbstkonfiguration des PCI-Busses (Plug and Play) notwendig, die eigene lokale Logik auf der Erweiterungskarte zu initialisieren. Nach erfolgter Initialisierung kann die Karte ihren eigenen Betrieb aufnehmen, bspw. das Einlesen von Daten in den Rechner. Für die Kommunikation (Initialisierung, Datentransfer) zwischen Erweiterungskarte und dem Betriebssystem des PCs ist ein Treiber zuständig. Dabei handelt es sich um ein Programm (Software), das speziell auf die spezifischen Eigenheiten der Erweiterungskarte abgestimmt ist und somit die Karte korrekt initialisieren kann. Darüber hinaus bildet der Treiber die Standardschnittstelle des Betriebssystems, die für die Kommunikation mit Erweiterungskarten zur Verfügung steht, auf die Erweiterungskarte ab. Der Treiber leitet die Datenlese- und Schreibanfragen des Betriebssystems in einer geeigneten Form an die Erweiterungskarte weiter.

Neben Datentransferanfragen von seiten des Betriebssystem ist es auch möglich, daß die Erweiterungskarte dem PC signalisiert, daß diese Daten benötigt oder abliefern möchte. Die Signalisierung von seiten der Erweiterungskarte geschieht durch sogenannte Unterbrechungsanforderungen (Interrupte), die den normalen sequenziellen Programmablauf des PCs unterbrechen. Bei einem von einer Erweiterungskarte ausgelösten Interrupt wird in eine speziell für diese Unterbrechung vom Treiber zur Verfügung gestellte Softwareroutine gesprungen, die sog. Interrupt-Service-Routine (ISR).

Die ISR erkennt anhand des Interrupts die Art der Unterbrechungsanforderung und bedient diese, indem diese bspw. Daten von der Karte ausliest und in den Hauptspeicher des PCs ablegt und so die ausgelesenen Daten den Anwendungsprogrammen zur Weiterverarbeitung zur Verfügung stellt. Der Code in der ISR sollte möglichst kurz und kompakt sein, um die Dauer der Unterbrechung zu minimieren und somit die Leistungsfähigkeit des gesamten Systems nicht unnötig zu beeinträchtigen.

Neben der Möglichkeit, daß der Prozessor mit Hilfe des Treibers den Datentransport zwischen Hautspeicher und einer Erweiterungskarte selbst ausführt, gibt es auch noch einen direkten Speicherzugriff, den sog. DMA-Transfer (DMA; Direct Memory Access: direkter Speicherzugriff). Bei dem DMA-Transfer erfolgt ein direkter Zugriff der Erweiterungskarte auf den PC-Hauptspeicher. Hierzu wird der Hauptspeicherbereich, aus dem die Daten für die Karte gelesen oder in den die Daten geschrieben werden sollen, durch seine Startadresse direkt der Karte mitgeteilt. Diese erlangt daraufhin die Kontrolle auf dem PCI-Bus (Master) und überträgt die Daten zwischen dem über die Startadresse definierten Hauptspeicherbereich und der PCI-Erweiterungskarte selbständig ohne Belastung des Prozessors. Nachdem der Datentransfer beendet ist, löst die Karte einen Interrupt aus, um dem Treiber die erfolgreiche Datenübertragung mitzuteilen.

Moderne Betriebssysteme wie Windows NT/2000 oder auch Linux sind sog. Multitasking Betriebssysteme, was bedeutet, daß diese mehreren Anwendungen, die gleichzeitig bearbeitet werden sollen, Prozessörzeit in Form von kleinen Zeitscheiben im Bereich von jeweils Millisekunden zur Verfügung stellen. Durch dieses Zeitscheibenverfahren entsteht für den Benutzer des PCs der Eindruck, daß alle aktiven Anwendungen gleichzeitig arbeiten. Da physisch bzw. physikalisch unabhängig von der Anzahl der laufenden Anwendungen jedoch nur ein begrenzter Umfang an Hauptspeicher zur Verfügung steht, verwenden moderne Prozessoren das Konzept des virtuellen Speichers, um diese Beschränkung zu umgehen und allen Anwendungen den von ihnen benötigten Speicher zur Verfügung zu stellen.

Das Konzept des virtuellen Speichers beruht darauf, sämtlichen Anwendungen einen sehr großen (virtuellen) Hauptspeicher vorzutäuschen (bspw. 2 GB), auch wenn wesentlich weniger physikalischer Speicher zur Verfügung steht (z.B. 128 MB). Dies wird dadurch erreicht, daß der Speicher in viele kleine Einheiten, den sog. Seiten oder Pages unterteilt wird. Die typische Größe für solch eine Page beträgt 4.096 Byte. Fordert nun eine Anwendung Speicher an (bspw. für Daten oder Programmcode), so wird dieser der benötigte Speicher in Form einer gewissen Anzahl von Seiten zur Verfügung gestellt. Die Einteilung des Speichers in Pages wird von allen modernen Prozessoren durch Hardware unterstützt. Sobald eine Anwendung auf den Speicher zugreift, übersetzt eine sog. Memory Management Unit (MMU) die virtuellen Speicheradressen in physikalische Adressen. Läuft die Zeitscheibe einer Anwendung A ab und benötigt die nächste Anwendung B auch Speicher, der ebenfalls gerade von der ersten Anwendung A benutzt wurde, so werden die Seiten der ersten Anwendung A ausgelagert, bspw. auf die Festplatte. Damit gehen die Daten oder der Code von der Anwendung A nicht verloren, aber Anwendung B kann dennoch den zuvor von Anwendung A genutzten physikalischen Speicher nutzen.

Sollen größere Datenmengen, wie z.B. Videodaten, zwischen einer PCI-Erweiterungskarte und dem Hauptspeicher des PCs übertragen werden, so ist im Hauptspeicher des PCs ein entsprechend großer Bereich für diese Daten zu reservieren. Ist der reservierte Bereich größer als eine Speicherseite (bspw. 4.096 Byte), so setzt sich dieser zwangsläufig aus mehreren Speicherseiten zusammen. Diese Seiten besitzen dann logisch aufeinanderfolgende virtuelle Adressen. Diese virtuellen Adressen werden von der MMU auf den physikalisch vorhandenen Speicher abgebildet, wobei durch die Übersetzung die virtuellen Adressen nicht zwangsläufig auch auf physikalisch aufeinanderfolgende Adressen abgebildet werden müssen.

Die den virtuellen Seiten entsprechenden physikalischen Seiten, können somit weit verstreut im physikalischen Hauptspeicher des PCs liegen. Ein Datentransfer über den PCI-Bus arbeitet hingegen ausschließlich mit den physikalischen Adressen des Speichers. Damit ein DMA-Transfer die im virtuellen Speicher zusammenhängenden Daten in der richtigen Reihenfolge liest bzw. die Daten so schreibt, daß sie anschließend zusammenhängend im virtuellen Speicher liegen, muß dieser also auf die zufällig verteilten physikalischen Speicheradressen der einzelnen Seiten zugreifen. Dies bedeutet, daß immer nur 4.096 Bytes innerhalb eines Transfers gelesen oder geschrieben werden können.

Dazu zeigt die US 5,890,220 eine Speichereinrichtung, die in Seiten unterteilt ist und einen ersten Speicherbereich und einen zweiten Speicherbereich umfasst, wobei der erste Speicherbereich für Daten vorgesehen ist und der zweite Speicherbereich die physikalischen Adressen der Seiten des ersten Speicherbereichs enthält. Darin wird in dem zweiten Speicherbereich ein DMA Adressumsetzungsbereich gezeigt, in welchem bei CPU Zugriff die entsprechende physikalische Adresse des Hauptspeichers erzeugt wird, damit wie oben erwähnt ein DMA-Transfer die im virtuellen Speicher zusammenhängenden Daten in der richtigen Reihenfolge liest. D.h. auch hier werden immer nur 4.096 Bytes innerhalb eines Transfers gelesen oder geschrieben.

Dieses Problem wird derzeit dadurch gelöst, daß der Treiber zu jeder virtuellen Speicherseite die physikalische Adresse ermittelt und der Erweiterungskarte zur Verfügung stellt. Nach dem heutigen Stand der Technik sind zwei Methoden hierfür bekannt. Nach der ersten Methode enthält das PCI-Interface auf der Erweiterungskarte einen begrenzten Registerspeicher für die Seitenadressen des Hauptspeichers. Nach der zweiten Methode enthält das PCI-Interface auf der Erweiterungskarte genug Registerspeicher um alle

Seitenadressen für einen kompletten Datensatz aufnehmen zu können.

Als Beispiel zur Veranschaulichung wird im folgendem davon ausgegangen, daß ein Videobild mit CCIR-Auflösung von der Erweiterungskarte in den Rechner übertragen werden soll.

Ein CCIR-Bild besteht aus 720 * 576 Bildpunkten. Jeder Bildpunkt benötigt im YCbCr-Format 2 Byte, woraus sich eine Datenmenge für ein CCIR-Bild von

$$720 * 576 * 2 \text{ Byte} = 829.440 \text{ Byte ergibt.}$$

Diese 829.440 Byte belegen

$$829.440 / 4.096 = 202,5,$$

also aufgerundet 203 Pages im Hauptspeicher des PCs.

Nach der ersten Methode enthält das PCI-Interface auf der Erweiterungskarte einen begrenzten (Register)-Speicher für die Seitenadressen des Hauptspeichers. Verfügt die Erweiterungskarte bspw. über acht Register für Speicheradressen (8 * 32 Bit = 32 Byte), müssen vor Beginn eines Datentransfers diese acht Register mit gültigen Adressen initialisiert werden. Danach können maximal

$$8 * 4.096 = 32.786 \text{ Byte}$$

selbständig von der Karte per DMA in den Hauptspeicher des PCs übertragen werden. Nach jedem DMA-Transfer muß ein Interrupt ausgelöst werden, um den erfolgreichen Transfer bekannt zu geben und damit acht neue Speicheradressen anzufordern. Nimmt man beispielsweise an, daß 25 CCIR-Bilder pro Sekunde in den Rechner übertragen werden sollen, so ergibt sich:

$$829.440 * 25 \text{ 1/s} = 20.763.000 \text{ Byte/s}$$

$$20.736.000 \text{ Byte/s} / 32.768 \text{ Byte} = 632,8 \text{ 1/s}$$

Folglich erhält man allein für die Übertragung einer Sekunde Bilddaten 633 Interrupte pro Sekunden.

Nach der zweiten Methode enthält das PCI-Interface auf der Erweiterungskarte genügend (Register)-Speicher, um alle Seitenadressen für ein komplettes CCIR-Bild aufnehmen zu können. Dies müssen für diesen Anwendungsfall also mindestens 203 Register mit je 32 Bit (812 Byte) sein.

Damit ist für jedes Bild nur ein Interrupt nötig, der den erfolgreichen Datentransfer bestätigt und für das nächste Bild wieder 203 (neue) Adressen anfordert. Damit ergeben sich bei 25 Bildern pro Sekunde auch 25 Interrupte pro Sekunde.

Bei der vorstehend erläuterten ersten Methode wird die Performance des Systems aufgrund der großen Anzahl von Interruptanforderungen erheblich beeinträchtigt.

Jede dieser Anforderungen zwingt das System, die derzeitige Anwendung zu unterbrechen, den aktuellen Inhalt der CPU-Registerwerte zwischenzuspeichern, die Quelle für den Interrupt zu ermitteln und die entsprechende ISR auszuführen. Anschließend wird nach Wiederherstellung der alten CPU-Registerwerte zu der zuvor unterbrochenen Anwendung zurückgekehrt.

Der Vorteil dieser Methode liegt bedingt durch die geringe Anzahl an zu speichernden Seitenadressen in dem geringen Bedarf an Adreßregistern (Speicherplatz gleich Chipfläche bzw. FPGA-Ressourcen) im PCI-Interface auf der Erweiterungskarte.

Die zweite Methode bietet im Gegensatz zur ersten Methode eine erheblich gesteigerte Performance, da das System wesentlich weniger Interruptanforderungen verarbeiten muß. Dieser Vorteil wird aber durch einen deutlichen Mehraufwand an Hardware erkauft. Der Hardwareaufwand (Chipfläche bzw. FPGA-Ressourcen) liegt im genannten Beispiel um Faktor 25 höher als derjenige bei der ersten Methode.

Vorteile der Erfindung

Das erfindungsgemäße Verfahren dient zum Übertragen von Daten über einen Datenbus, und zwar zwischen einer Speichereinrichtung, die in Seiten bzw. Pages unterteilt ist, wobei auf die Seiten mittels physikalischer Adressen zugegriffen werden kann, und einer mit der Speichereinrichtung über den Datenbus verbundenen elektronischen Einheit.

Die Speichereinrichtung umfaßt erfindungsgemäß einen ersten und einen zweiten Speicherbereich, wobei der erste Speicherbereich zur Speicherung von Daten vorgesehen ist und der zweite Speicherbereich die physikalischen Adressen der Seiten des ersten Speicherbereichs oder auch der gesamten Speichereinrichtung enthält. Die Reihenfolge der physikalischen Adressen im zweiten Speicherbereich entspricht dabei der Reihenfolge der virtuellen Seiten des ersten Speicherbereichs.

Während der Datenübertragung werden die benötigten physikalischen Adressen aus dem zweiten Speicherbereich selbständig auf die elektronische Einheit übertragen. Damit ist der elektronischen Einheit die Lage der physikalischen Adressen bekannt. Selbständig übertragen bedeutet eine Übertragung ohne Eingriff eines Systemprozessors, der der Speichereinrichtung zugeordnet ist. Damit erweitert das Verfahren den Ansatz, daß die elektronische Einheit selbständig und ohne Eingriff des Systemprozessors Daten aus der Speichereinrichtung übertragen kann nun auch auf die selbständige Übertragung von Adreßdaten.

Das erfindungsgemäße Verfahren verbindet somit die Vorteile der beiden vorstehend beschriebenen Methoden, nämlich geringer Speicherbedarf und geringe Systembelastung, und vermeidet deren Nachteile. Somit ermöglicht das Verfahren je nach bisher verwendeter Datenübertragungsmethode entweder eine wesentliche Verringerung der Anzahl der Interruptanforderungen und damit eine erhebliche Erhöhung der System-Performance oder im anderen Fall einen stark verringerten Bedarf an Hardwareressourcen, die für die Realisierung des PCI-Interfaces notwendig sind. Dabei erfährt die Art der eigentlichen Datenübertragung keine Änderung und wird somit nicht beeinflußt. Es wird lediglich die Art und Weise der Übertragung der Seitenadressen geändert.

Mit dem erfindungsgemäßen Verfahren ist es somit zum einen nicht mehr notwendig, alle für eine vollständige Datenübertragung notwendigen Adressen in einem Speicher auf der elektronischen Einheit zu halten. Der Nachteil der zweiten Methode, nämliche der hohe Speicherbedarf innerhalb der Schnittstelle der elektronischen Einheit ist damit aufgehoben. Andererseits wird, obwohl die elektronische Einheit nicht mehr alle physikalischen Adressen speichert, nicht mehr, wie bei der ersten Methode, nach einer gewissen Anzahl abgearbeiteter Adressen eine Interruptanforderung an das System gesendet und damit eine Unterbrechung der laufenden Anwendung ausgelöst.

Das erfindungsgemäße Verfahren beinhaltet Änderungen in der Hard- sowie der Softwareimplementierung bei PCI-Interface und Treiber. Die Hardwareimplementierung ist sowohl bei PCI-Bridges in Standard-IC-Technik als auch bei PCI-Cores in einer Hardwarebeschreibungssprache anwendbar. Der Softwareteil ist unabhängig von dem verwendeten Betriebssystem und kann in jeder Treiberimplementierung eingesetzt werden.

Vorteilhafterweise wird zu Beginn der Datenübertragung eine Startadresse des zweiten Speicherbereichs an die elektronische Einheit übergeben. Damit sind der elektronischen Einheit die Lage, also der physikalische Ort, der physikalischen Adressen der Seiten der Speichereinrichtung bekannt.

Das erfindungsgemäße Verfahren eignet sich sowohl zum Schreiben von Daten von der elektronischen Einheit in die Speichereinrichtung als auch zum Lesen von in der Speichereinrichtung abgelegten Daten.

Als Datenbus bietet sich der PCI-Bus an, der insbesondere bei PCs weit verbreitet ist.

In Ausgestaltung des erfindungsgemäßen Verfahrens ist die Speichereinrichtung ein auf einer Hauptplatine einer elektronischen Recheneinheit (Computer) angeordneter Hauptspeicher. Als elektronische Einheit ist eine in einem Einsteckplatz der Hauptplatine eingesetzte Steckkarte bzw. Erweiterungskarte vorgesehen. In diesem Fall ist die CPU der elektronischen Recheneinheit der Systemprozessor.

Typischerweise werden die physikalischen Adressen per DMA-Transfer auf die elektronische Einheit übertragen.

Die erfindungsgemäße Speichereinrichtung ist in Seiten unterteilt und umfaßt einen ersten Speicherbereich und einen zweiten Speicherbereich. Der erste Speicherbereich ist für Daten vorgesehen, d.h. in diesem Speicherbereich sind die zu lesenden Daten abgespeichert bzw. in diesen Speicherbereich werden Daten geschrieben. In dem zweiten Speicherbereich sind die physikalischen Adressen der Seiten des ersten Speicherbereichs abgelegt. Diese Adressen erlauben entweder den Zugriff auf die in dem ersten Speicherbereich abgelegten Daten und/oder ermöglichen ein Beschreiben des ersten Speicherbereichs.

Die erfindungsgemäße Speichereinrichtung wird vorzugsweise als ein auf einer Hauptplatine einer elektronischen Recheneinheit angeordneter Hauptspeicher verwendet.

Die erfindungsgemäße Hauptplatine einer elektronischen Recheneinheit (Computer) zeichnet sich dadurch aus, daß als Hauptspeicher eine erfindungsgemäße Speichereinrichtung dient.

Die erfindungsgemäße elektronische Recheneinheit weist einen Hauptspeicher auf. Als Hauptspeicher ist eine erfindungsgemäße Speichereinrichtung vorgesehen. Die CPU der Recheneinheit dient.als Systemprozessor. Der Hauptspeicher ist vorzugsweise auf einer Hauptplatine angeordnet.

Das erfindungsgemäße System umfaßt eine erfindungsgemäße Speichereinrichtung und eine erfindungsgemäße elektronische Einheit. Diese sind über einen Bus, vorzugsweise den PCI-Bus, miteinander zum Übertragen von Daten und Adressen verbunden.

Die erfindungsgemäße elektronische Einrichtung, bei der eine elektronische Recheneinrichtung bzw. eine CPU, eine Speichereinrichtung und eine elektronische Einheit in einem Bauteil integriert sind, stellt ein kompaktes System dar. Bei diesem sind bspw. auf einer Kante oder sogar in einem einzelnen Chip (SoC: System on Chip) alle Komponenten integriert.

Das erfindungsgemäße Computerprogramm weist Programmcodemittel auf, um alle Schritte eines vorstehend beschriebenen Verfahrens durchzuführen. Das Computerprogramm wird auf einem Computer oder einer Recheneinheit, insbesondere einer erfindungsgemäßen elektronischen Recheneinheit, ausgeführt.

Das erfindungsgemäße Computerprogrammprodukt umfaßt eben diese Programmcodemittel und ist auf einem computerlesbaren Datenträger gespeichert.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnung

Die Erfindung ist anhand von Ausführungsbeispielen in der Zeichnung dargestellt und wird im folgenden unter Bezugnahme auf die Zeichnung näher erläutert.

Figur 1    zeigt die Grundstruktur eines PCI-Systems in schematischer Darstellung.

Figur 2    zeigt eine Erweiterungskarte mit einem PCI-Bus-Interface.

Figur 3    verdeutlicht den Zusammenhang zwischen virtuellen und physikalischen Adressen.

Figur 4    zeigt eine bevorzugte Ausführungsform der erfindungsgemäßen elektronischen Recheneinheit in schematischer Darstellung.

Figur 5    veranschaulicht das Zusammenwirken einer erfindungsgemäßen Speichereinrichtung mit einer Erweiterungskarte.

Figur 6    zeigt eine bevorzugte Ausführungsform des erfindungsgemäßen Verfahrens in einem Flußdiagramm.

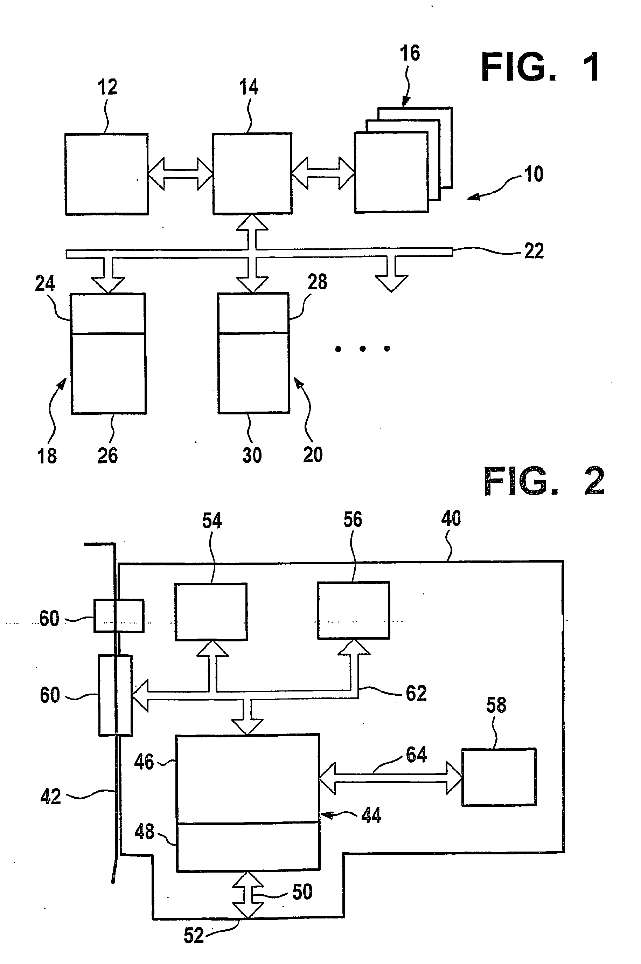

In Figur 1 ist die Grundstruktur eines PCI-Systems, insgesamt mit der Bezugsziffer 10 bezeichnet, dargestellt.
Zu erkennen ist eine CPU 12, eine sogenannte Host-Bridge 14, ein Hauptspeicher 16, eine erste PCI-Karte 18, eine zweite PCI-Karte 20 und ein PCI-Bus 22.
Die erste PCI-Karte 18 umfaßt ein erstes PCI-Interface 24 und eine erste lokale Logik 26. Die zweite PCI-Karte 20 weist entsprechend ein zweites PCI-Interface 28 und eine zweite lokale Logik 30 auf.
Die PCI-Karten 18 und 20 sind mit den Schnittstellen, den PCI-Interfaces 24 und 28, an den PCI-Bus 22 angeschlossen. Damit sind auch die lokalen Logiken 26 und 30 an den PCI-Bus 22 angeschlossen.
Die Anbindung der CPU 12 und des Hauptspeichers 16 erfolgt über die Host-Bridge 14.
In Figur 2 ist eine Erweiterungs- bzw. Einsteckkarte 40 mit einem Slotblech 42 dargestellt.
Auf der Einsteckkarte 40 befindet sich ein PCI-Block 44, der wiederum eine lokale Logik 46 und ein PCI-Interface 48 umfaßt. Wie durch einen Doppelpfeil 50 verdeutlicht ist, ist das PCI-Interface 48 mit dem PCI-Bus 52 der Hauptplatine der elektronischen Recheneinheit verbunden.
Auf der Einsteckkarte 40 sind weiterhin ein erster Logikblock 54, ein zweiter Logikblock 56 und ein dritter Logikblock 58 vorgesehen. Des weiteren sind Steckverbinder 60 dargestellt, die den festen Halt der Einsteckkarte 40 sichern und Anschlüsse für einen Datenaustausch umfassen.
Die lokale Logik 46 ist über einen lokalen proprietären Bus 62 mit dem ersten und dem zweiten Logikblock 54 und 56 verbunden. Zwischen der lokalen Logik 46 und dem dritten Logikblock 58 besteht auch eine direkte Anbindung 64.

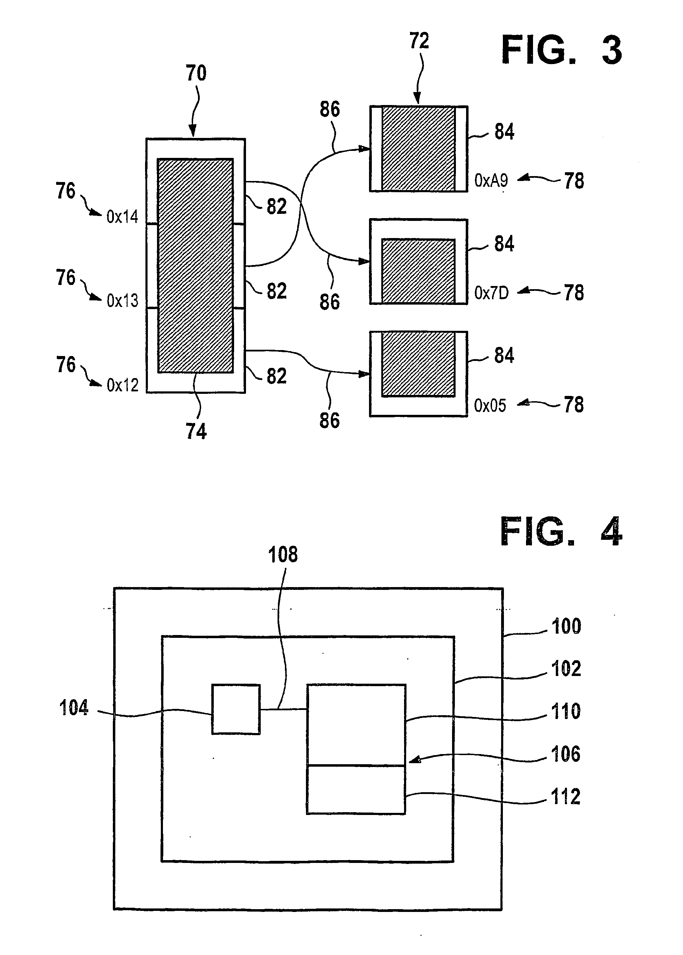

In Figur 3 ist der Zusammenhang zwischen virtuellen und physikalischen Adressen verdeutlicht.
Dargestellt ist die virtuelle Organisation 70 des Speichers, nachfolgend als virtueller Speicher bezeichnet, und die physikalische Organisation 72 des Speichers, nachfolgend als physikalischer Speicher bezeichnet. In dem virtuellen Speicher 70 ist ein Datenelement 74 enthalten. Die mit der Bezugsziffer 76 bezeichneten Angaben 0x14, 0x13 und 0x12 sind Beispiele für virtuelle Adressen. Beispiele für physikalische Adressen 0xA9, 0x7D und 0x05 sind mit der Bezugsziffer 78 bezeichnet.
Das Datenelement 74 in dem physikalischen Speicher 70 umfaßt drei Seiten 82, die mit den virtuellen Adressen 76 gekennzeichnet sind. Diese Seiten 82 besitzen logisch aufeinanderfolgende virtuelle Adressen. Mit der Bezugsziffer 84 sind drei physikalische Seiten im physikalischen Speicher 72 bezeichnet. Pfeile 86 verdeutlichen die Zuweisung von dem virtuellen Speicher 70 zu dem physikalischen Speicher 72. Zu erkennen ist, daß die den virtuellen Seiten 82 entsprechenden physikalischen Seiten 84 weit verstreut im Hauptspeicher liegen. Die virtuellen Adressen 76 werden von der MMU auf den physikalisch vorhandenen Speicher 72 abgebildet.
Der Datentransfer auf dem PCI-Bus arbeitet ausschließlich mit den physikalischen Adressen 78 des physikalischen Speichers 72. Damit ein DMA-Transfer die im virtuellen Speicher 70 zusammenhängenden Daten in der richtigen Reihenfolge liest bzw. die Daten so schreibt, daß diese anschließend zusammenhängend im virtuellen Speicher 70 liegen, muß im Rahmen des Transfers auf die zufällig verteilten physikalischen Speicheradressen 78 zugegriffen werden.

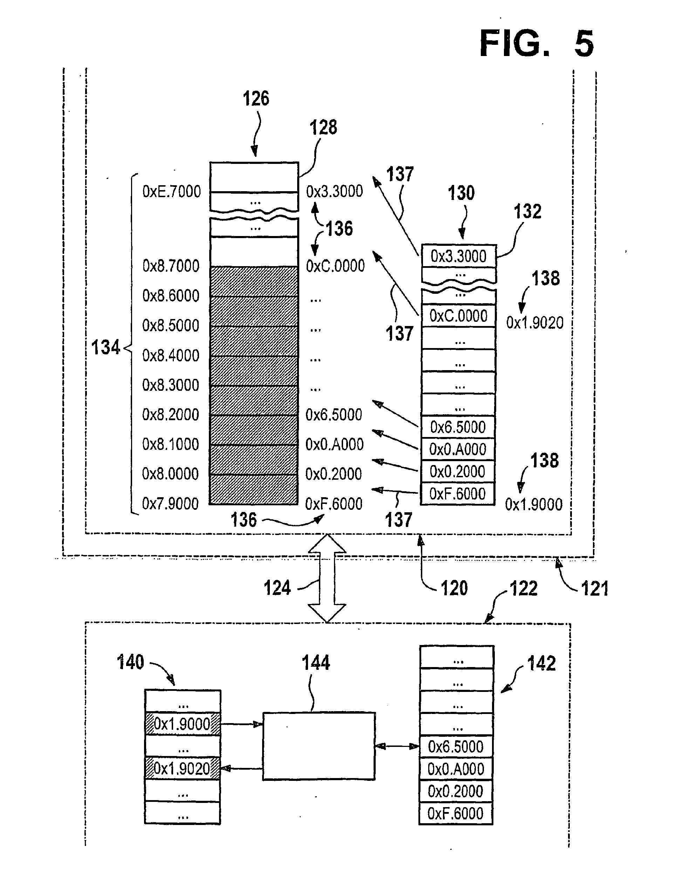

Figur 4 zeigt eine bevorzugte Ausführungsform einer erfindungsgemäßen elektronischen Recheneinheit, insgesamt mit der Bezugsziffer 100 bezeichnet. Die Recheneinheit 100 ist bspw. ein Computer bzw. ein PC. Zu erkennen ist eine Hauptplatine 102, auf der eine CPU 104 und eine Speichereinrichtung 106, der Hauptspeicher 106 der elektronischen Recheneinheit 100, angeordnet sind. Die CPU 104 und der Hauptspeicher 106 sind über einen Standardbus 108 miteinander verbunden.
Der Hauptspeicher 106 umfaßt einen ersten Speicherbereich 110 und einen zweiten Speicherbereich 112. Der erste Speicherbereich 110 ist für Daten vorgesehen. Dies bedeutet, daß in diesem Bereich die Daten abgelegt sind, auf die zugegriffen werden soll und/oder in den ersten Speicherbereich 110 Daten, bspw. von der Einsteckkarte 40, geschrieben werden können. Der zweite Speicherbereich 112 enthält die physikalischen Adressen 78 der Seiten des ersten Speicherbereichs 110 bzw. des gesamten Hauptspeichers 106.

In Figur 5 ist das Zusammenspiel zwischen einer elektronischen Recheneinheit 121 und einer Erweiterungskarte 122, die über einen PCI-Bus 124 verbunden sind, veranschaulicht. Die elektronische Recheneinheit 121 enthält einen Hauptspeicher 120.

Mit der Bezugsziffer 126 ist der in Seiten 128 unterteilte erste Speicherbereich des Hauptspeichers 120 dargestellt. Eine Seite 128 umfaßt typischerweise 4.096 Byte.

Mit der Bezugsziffer 130 ist der zweite Speicherbereich, nämlich der Speicherbereich für die Adreßtabelle, gekennzeichnet, der in Adreßspeicherplätze 132 unterteilt ist.

Die mit 134 bezeichneten Angaben (0xE.7000 usw.) sind die logisch aufeinanderfolgenden virtuellen Adressen. Angaben 136 (0x3.3000 usw.) sind die beliebig verteilten physikalischen Adressen der Seiten 128 des ersten Speicherbereichs 126. Pfeile 137 verdeutlichen die Zuordnung der Daten der in dem zweiten Speicherbereich 130 enthaltenen Adreßtabelle auf die physikalischen Adressen 136 der Seiten 128 des ersten Speicherbereichs 126. D.h. in dem zweiten Speicherbereich 130 sind in einer Adreßtabelle die physikalischen Adressen 136 des ersten Speicherbereichs 126 enthalten.

Die mit 138 gekennzeichneten Angaben Ox1.9020 und Ox1.9000 sind die physikalischen Adressen der Adreßspeicherplätze 132 des zweiten Speicherbereichs 130, wobei die Angabe Ox1.9000 die physikalische Basisadresse, d.h. die benötigte Startadresse, der Adreßtabelle wiedergibt.

In der PCI-Erweiterungskarte 122 ist ein Registerspeicher 140 vorgesehen, der die lokalen Register der Erweiterungskarte 122 enthält. In diesen Registern sind die benötigten physikalischen Adressen 138 des zweiten Speicherbereichs 130 abgelegt. Die Angabe Ox1.9000 stellt die Basisadresse der Adreßtabelle dar. Die Angabe Ox1.9020 ist die beispielhafte Basisadresse für den nächsten Adreßblock aus der Adreßtabelle bei einer beispielhaften Adreßblocklänge von acht.

In einem Adreßspeicher 142 sind lokale Zieladressen, d.h. der Inhalt des zweiten Speicherbereichs 130 bzw. die physikalischen Adressen 136 des ersten Speicherbereichs 126, enthalten. Die Tiefe beträgt im Beispiel acht Register, die per PCI-Master-DMA durch die PCI-Erweiterungskarte 122 gefüllt wird. Der Adreßspeicher 142 enthält somit Adressen von acht Seiten 128. Zwischen dem Registerspeicher 140 und dem Adreßspeicher 142 ist eine Adreßverwaltungslogik 144 vorgesehen.

Bei der Initialisierung legt der Treiber im Hauptspeicher des PCs einen ersten Speicherbereich 126 mit der von den Bilddaten benötigten Größe an. Anhand dieser Größe berechnet dieser die Anzahl der benötigten Speicherseiten 128, die der erste Speicherbereich 126 einnimmt. Davon ausgehend wird der zweite Speicherbereich 130 angelegt, die physikalischen Adressen 136 des ersten Speicherbereichs 126 werden ermittelt (in Figur 5 0xF.6000, 0x0.2000 usw.) und im zweiten Speicherbereich 130 abgelegt. Die physikalische Basisadresse, die Startadresse, der Adreßtabelle im zweiten Speicherbereich 130 (in diesem Fall 0x1.9000) teilt der Treiber der Erweiterungskarte mit. Diese speichert den Wert in einem lokalen Register, in diesem Fall in dem Registerspeicher 140.

Beim Start der Datenübertragung beginnt die Karte, ausgehend von der Basisadresse 138 der Adreßtabelle (0x1.9000) bspw. acht Basisadressen 136 der Speicherseiten 128 des für die Datenübertragung reservierten Bereichs (0xF. 6000, 0x0.2000 usw.) aus dem Hauptspeicher 120 des PCs per PCI-Master-DMA auszulesen und lokal in 142 abzulegen. Im Anschluß daran werden die Daten ebenfalls per PCI-Master-DMA in die auf diese Weise referenzierten Speicherseiten 128 übertragen. Sobald 8 * 4.096 Datenbyte übertragen sind, holt sich die Karte in einem weiteren PCI-Master-DMA-Zyklus die neuen Basisadressen, d.h. die physikalischen Adressen 136, für die nächsten acht Speicherseiten.

Die interne Logik des PCI-Controllers muß zusätzlich zu der herkömmlichen Logik weitere Register umfassen, die der Verwaltung der Speicheradressen für die Adreßtabelle dienen. Ähnlich wie bei der Verwaltung der Adressen für den Datenspeicher wird auch hier die Adresse zwischengespeichert (0x1.9020), deren Speicherzelle wiederum die Adresse enthält (Ox0.C000), die auf die nächste zu nutzende Speicherseite verweist. Anstatt eine Interruptanforderung gemäß der bekannten ersten Methode auszulösen, werden nun die lokalen Adreßregister selbständig vom PCI-Controller aktualisiert.

Durch das erfindungsgemäße Verfahren ist es möglich, daß trotz der geringeren Anzahl von Zieladreßregistern und den damit gesparten Hardwareressourcen nur ein Interrupt pro Datenblock ausgelöst wird. Dieser eine Interrupt ist auch weitestgehend unabhängig von der Größe des Datenblocks. Im Falle von Datenblöcken, die größer als 4 MegaByte sind, sind gegebenenfalls mehrere Adreßtabellen zu verwenden, da hierbei die Adreßtabelle selbst mehr als eine Speicherseite einnimmt, oder es wird über mehr als eine Interruptanforderung pro Datenblock die Aktualisierung der Adreßtabelle angefordert.

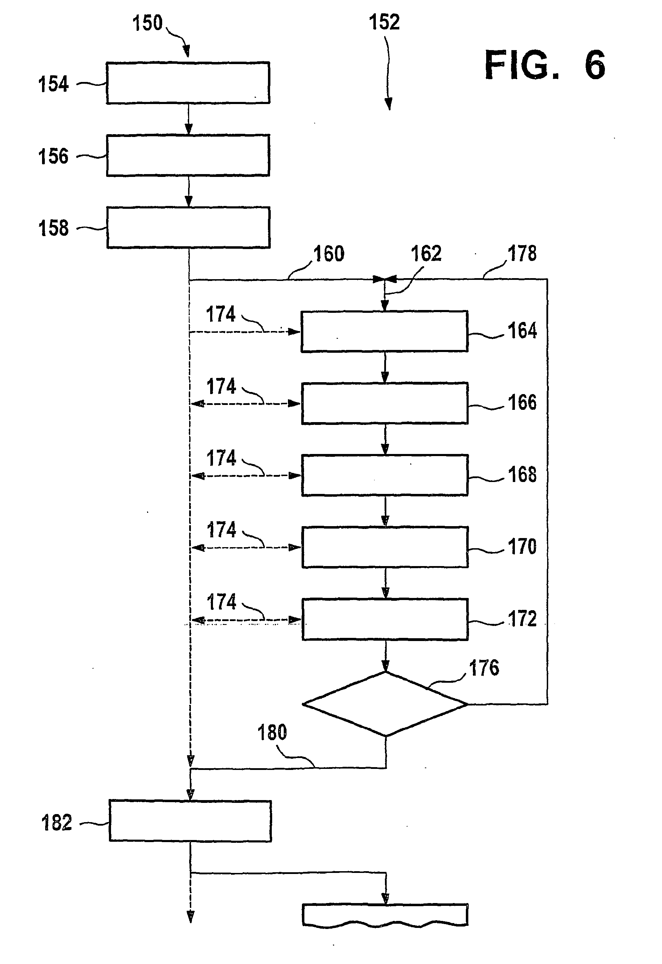

In Figur 6 ist in einem Flußdiagramm eine bevorzugte Ausführungsform des erfindungsgemäßen Verfahrens wiedergegeben. Mit der Bezugsziffer 150 ist auf die Verfahrensschritte hingewiesen, die durch den Treiber ausgeführt werden. Bezugsziffer 152 verweist auf die in der Erweiterungskarte durchgeführten Verfahrensschritte.

In einem Schritt 154 wird der erste Speicherbereich, der Datenspeicher, und in einem Schritt 156 die Adreßtabelle bzw. der zweite Speicherbereich bestimmt. Anschließend werden in einem Schritt 158 die physikalischen Adressen des Datenspeichers ermittelt und in der Adreßtabelle abgelegt.

Es erfolgt, wie mit einem Pfeil 160 verdeutlicht, die Initialisierung der Erweiterungskarte und die Übertragung der Startadresse der Adreßtabelle.

Beim Start der Datenübertragung, wie mit einem Pfeil 162 gezeigt, wird zunächst der erste Teil der Adreßtabelle in einem Schritt 164 aus dem PC-Hauptspeicher in den lokalen Speicher der Erweiterungskarte eingelesen. Anschließend erfolgt in einem Schritt 166 das Übertragen der (Nutz)-Daten der Speicherseite x + 0. Ist der Datenblock nicht bereits vollständig übertragen, dann folgt in einem Schritt 168 das Übertragen der Daten der Seite x + 1. Diese Vorgänge wiederholen sich 170, bis in einem Schritt 172 das Übertragen der Daten der Speicherseite x + 7 durchgeführt wird. Die Übertragung erfolgt, wie mit gestrichelten Doppelpfeilen 174 veranschaulicht, per PCI-Master-DMA.

In einem Schritt 176 wird überprüft, ob der zu übertragene Datenblock zu Ende ist, d.h. bereits vollständig übertragen wurde. Ist dies nicht der Fall springt der Ablauf gemäß Pfeil 178 zurück zum Verfahrensschritt 164. Ist der Datenblock vollständig übertragen, erfolgt, wie mit einem Pfeil 180 verdeutlicht, ein Interrupt.

Nachfolgend werden in einem Schritt 182 empfangene Daten verarbeitet bzw. neue Daten zum Senden vorbereitet.

Die PCI-Erweiterungskarte ist in der Lage als Bus-Master, selbständig und ohne Eingriff des Systemprozessors Daten per DMA aus dem Hauptspeicher des PCs zu lesen oder in diesen zu schreiben. Hierzu benötigt die Erweiterungskarte jedoch die physikalischen Adressen der Hauptspeicherseite, aus denen gelesen bzw. in die geschrieben werden soll. Bei den zum Stand der Technik beschriebenen zwei Methoden werden diese Adressen vom Treiber und damit vom Systemprozessor bzw von der CPU aktiv in den Registerspeicher des PCI-Interfaces geschrieben.

Das erfindungsgemäße Verfahren erweitert den Ansatz, nach dem die Erweiterungskarte selbständig Daten per DMA ohne Eingriff der CPU übertragen kann, nun auch auf die selbständige Übertragung von Adressen. Neben dem ersten Speicherbereich im Hauptspeicher des PCs, der als Datenspeicher dient, wird noch ein zweiter, in der Regel kleinerer Speicherbereich angelegt. In diesen zweiten Speicherbereich legt der Treiber nun alle physikalischen Adressen der Speicherseiten ab, aus denen der erste Speicherbereich besteht.

Bei Beginn der Datenübertragung wird dem PCI-Interface auf der Erweiterungskarte jetzt nur noch die Startadresse für den zweiten Speicherbereich übergeben. Damit ist der Erweiterungskarte die Lage der physikalischen Adressen der Hauptspeicherseiten bekannt. Während der Datenübertragung kann sich die Erweiterungskarte nun die Ziel- oder Quelladressen für die Daten im ersten Speicherbereich je nach Bedarf aus dem zweiten Speicherbereich selbständig holen. Damit ist es einerseits nicht mehr notwendig, alle für eine komplette Datenübertragung benötigten Adressen im Speicher auf der Erweiterungskarte zu halten. Der Nachteil der beschriebenen zweiten Methode, nämlich der hohe Speicherbedarf innerhalb des PCI-Interfaces auf der Erweiterungskarte ist damit aufgehoben. Andererseits wird nicht mehr, obwohl die Erweiterungskarte nicht mehr alle physikalischen Adressen speichert, bspw. nach acht abgearbeiteten Adressen, wie bei der ersten Methode, eine Interruptanforderung an das System gesendet und damit eine Unterbrechung der laufenden Anwendung ausgelöst.

Die Karte liest die nächsten Seitenadressen selbst per DMA aus dem zweiten Speicherbereich in die internen Adreßregister. Damit wird nur noch für jeden Datenblock ein Interrupt ausgelöst. Die hohe Anzahl von Interrupten nach der ersten Methode wird demzufolge vermieden. Da innerhalb der ISR nun auch nicht mehr die Seitenadressen übertragen werden müssen, kann die Zeit für die Abarbeitung der Routine ebenfalls deutlich verringert werden.

Der zweite Speicherbereich für die Adressen sollte dabei möglichst die Größe einer Seite, also bspw. 4.096 Byte, nicht überschreiten, da sonst auch für die Adressen, die in dem zweiten Speicherbereich gehalten werden, mehrere Seitenadressen notwendig wären. Dies ist jedoch im allgemeinen völlig ausreichend, wie die folgende Beispielrechnung zeigt.

Bei modernen Prozessoren sind Adressen 32 Bit, also 4 Byte, groß. Damit ist es möglich, in einer Speicherseite

$$4.096 \text{ Byte} / 4 \text{ Byte} = 1024$$

(Seiten)-Adressen abzulegen. Mit diesen lassen sich 1024 Seiten ansprechen. Der auf diese Weise adressierbare Speicherbereich umfaßt folglich:

$$1.024 * 4.096 \text{ Byte} = 4.194.304 \text{ Byte} = 4 \text{ MegaByte.}$$

Unabhängig davon ist das vorgestellte Konzept aber auch für mehr als eine solche Adreßtabelle anwendbar. Somit sind auch Übertragungen umfangreicherer Datenmengen denkbar. In diesem Fall sind mehrere Speicherseiten als Adreßtabelle zu definieren und deren Anfangsadresse ist im PCI-Interface abzulegen.

**Patentansprüche**

1. Verfahren zum Übertragen von Daten über einen Datenbus (22, 52, 124), zwischen einer Speichereinrichtung (16, 106, 120), die in Seiten (82, 84, 128) unterteilt ist und einen ersten Speicherbereich (110, 126) und einen zweiten Speicherbereich (112, 130) umfasst, wobei auf die Seiten (82, 84, 128) mittels physikalischer Adressen (78, 136, 138) zugegriffen werden kann, und einer mit der Speichereinrichtung (16, 106, 120) über den Datenbus (22, 52, 124) verbundenen elektronischen Einheit (40, 122), die wenigstens einen Adressspeicher (140, 142) enthält und wobei der erste Speicherbereich (110, 126) zur Speicherung von Daten vorgesehen ist und der zweite Speicherbereich (112, 130) die physikalischen Adressen (78, 136, 138) der Seiten (82, 84, 128) des ersten Speicherbereichs (110, 126) enthält, **dadurch gekennzeichnet, dass** die Übertragung der Daten in Datenblöcken erfolgt und bei der Datenübertragung eines ersten Datenblocks die benötigten physikalischen Adressen (78, 136, 138) für einen zweiten Datenblock aus dem zweiten Speicherbereich (112, 130) von der elektronischen Einheit selbständig in den wenigstens einen Adressspeicher (140, 142) der elektronischen Einheit (40, 122) übertragen werden.

2. Verfahren nach Anspruch 1, bei dem zu Beginn der Datenübertragung eine Startadresse (138) des zweiten Speicherbereichs (112, 130) an die elektronische Einheit (40, 122) übergeben wird.

3. Verfahren nach Anspruch 1 oder 2, bei dem bei der Datenübertragung Daten von der elektronischen Einheit (40, 122) in die Speichereinrichtung (16, 106, 120) geschrieben werden.

4. Verfahren nach Anspruch 1 oder 2, bei dem bei der Datenübertragung in der Speichereinrichtung (16, 106, 120) abgelegte Daten von der elektronischen Einheit (40, 122) gelesen werden.

5. Verfahren nach einem der Ansprüche 1 bis 4, bei dem der Datenbus (22, 52, 124) ein PCI-Bus (22, 52, 124) ist.

6. Verfahren nach einem der Ansprüche 1 bis 5, bei dem die Speichereinrichtung (16, 106, 120) ein auf einer Hauptplatine (110) einer elektronischen Recheneinheit (100, 121) angeordneter Hauptspeicher (16, 106, 120) ist und als elektronische Einheit (40, 122) eine in einem Einsteckplatz (60) der Hauptplatine (110) eingesetzte Steckkarte (40, 122) vorgesehen ist.

7. Verfahren nach einem der Ansprüche 1 bis 6, bei dem die physikalischen Adressen (78, 136, 138) per DMA-Transfer auf die elektronische Einheit (40, 122) übertragen werden.

8. Vorrichtung mit einer Speichereinrichtung und einer elektronischen Einheit (40, 122), die wenigstens einen Adressspeicher (140, 142) enthält, wobei die Speichereinrichtung in Seiten (82, 84, 128, 132) unterteilt ist und einen ersten Speicherbereich (110, 126) und einen zweiten Speicherbereich (112, 130) umfasst, wobei der erste Speicherbereich (110, 126) für Daten vorgesehen ist und in dem zweiten Speicherbereich (112, 130) die physikalischen Adressen (78, 136, 138) der Seiten (82, 84, 128) des ersten Speicherbereichs (110, 126) abgelegt sind und die Speichereinrichtung und die elektronische Einheit derart ausgestaltet sind, dass auf die Seiten (82, 84, 128) mittels physikalischer Adressen (78, 136, 138) zugegriffen werden kann und so zwischen der Speichereinrichtung und der elektronischen Einrichtung Daten übertragen werden, **dadurch gekennzeichnet, dass** die Übertragung der Daten in Datenblöcken erfolgt und bei der Datenübertragung eines ersten Datenblocks die benötigten physikalischen Adressen (78, 136, 138) für einen zweiten Datenblock aus dem zweiten Speicherbereich (112, 130) von der elektronischen Einheit selbständig in den wenigstens einen Adressspeicher (140, 142) der elektronischen Einheit (40, 122) übertragen werden.

9. Vorrichtung nach Anspruch 8, **dadurch gekennzeichnet, dass** die Speichereinrichtung (16, 106, 120) als ein auf einer Hauptplatine (110) einer elektronischen Recheneinheit (100) angeordneter Hauptspeicher (16, 106, 120) ausgebildet ist.

10. Vorrichtung nach Anspruch 8, wobei die Speichereinrichtung (16, 106, 120) und die elektronische Einheit (40, 122) in einem Bauteil integriert sind.

**11.** Vorrichtung nach Anspruch 10, mit einer elektronischen Recheneinheit (100), die ebenfalls in das Bauteil integriert ist.

**12.** System mit einer Vorrichtung nach Anspruch 8, mit einem Datenbus, wobei die Speichereinrichtung und die elektronische Einheit (40, 122) über den Datenbus (22, 52, 124) miteinander verbunden sind.

**13.** Computerprogramm mit Programmcodemitteln, um alle Schritte eines Verfahrens nach einem der Ansprüche 1 bis 7 durchzuführen, wenn das Computerprogramm auf einem Computer oder eine entsprechenden Recheneinheit (100, 121), insbesondere einer elektronischen Recheneinheit (100, 121) nach Anspruch 11, ausgeführt wird.

**14.** Computerprogrammprodukt mit Programmcodemitteln, die auf einem computerlesbaren Datenträger gespeichert sind, um ein Verfahren nach einem der Ansprüche 1 bis 7 durchzuführen, wenn das Computerprogramm auf einem Computer oder auf einer entsprechenden Recheneinheit (100, 121), ausgeführt wird.

**Claims**

**1.** Method for transmitting data via a data bus (22, 52, 124) between a memory device (16, 106, 120), which is subdivided into pages (82, 84, 128) and comprises a first memory area (110, 126) and a second memory area (112, 130), the pages (82, 84, 128) being able to be accessed using physical addresses (78, 136, 138), and an electronic unit (40, 122) which is connected to the memory device (16, 106, 120) via the data bus (22, 52, 124) and contains at least one address memory (140, 142), the first memory area (110, 126) being provided for the purpose of storing data and the second memory area (112, 130) containing the physical addresses (78, 136, 138) of the pages (82, 84, 128) of the first memory area (110, 126), **characterized in that** the data are transmitted in data blocks and, when a first data block is being transmitted, the electronic unit independently transmits the requisite physical addresses (78, 136, 138) for a second data block from the second memory area (112, 130) to the at least one address memory (140, 142) of the electronic unit (40, 122).

**2.** Method according to Claim 1, in which a start address (138) of the second memory area (112, 130) is transferred to the electronic unit (40, 122) at the beginning of data transmission.

**3.** Method according to Claim 1 or 2, in which the electronic unit (40, 122) writes data to the memory device (16, 106, 120) during data transmission.

**4.** Method according to Claim 1 or 2, in which data which are stored in the memory device (16, 106, 120) are read by the electronic unit (40, 122) during data transmission.

**5.** Method according to one of Claims 1 to 4, in which the data bus (22, 52, 124) is a PCI bus (22, 52, 124).

**6.** Method according to one of Claims 1 to 5, in which the memory device (16, 106, 120) is a main memory (16, 106, 120) which is arranged on a main board (110) of an electronic arithmetic unit (100, 121), and a plug-in card (40, 122) which is inserted into a plug-in slot (60) of the main board (110) is provided as the electronic unit (40, 122).

**7.** Method according to one of Claims 1 to 6, in which the physical addresses (78, 136, 138) are transmitted to the electronic unit (40, 122) by DMA transfer.

**8.** Apparatus having a memory device and an electronic unit (40, 122) containing at least one address memory (140, 142), the memory device being subdivided into pages (82, 84, 128, 132) and comprising a first memory area (110, 126) and a second memory area (112, 130), the first memory area (110, 126) being provided for data and the physical addresses (78, 136, 138) of the pages (82, 84, 128) of the first memory area (110, 126) being stored in the second memory area (112, 130), and the memory device and the electronic unit being configured in such a manner that the pages (82, 84, 128). can be accessed using physical addresses (78, 136, 138) and data are thus transmitted between the memory device and the electronic device, **characterized in that** the data are transmitted in data blocks and, when a first data block is being transmitted, the electronic unit independently transmits the requisite physical addresses (78, 136, 138) for a second data block from the second memory area (112, 130) to the at least one address memory (140, 142) of the electronic unit (40, 122).

**9.** Apparatus according to Claim 8, **characterized in that** the memory device (16, 106, 120) is in the form of a main memory (16, 106, 120) which is arranged on a main board (110) of an electronic arithmetic unit (100).

10. Apparatus according to Claim 8, the memory device (16, 106, 120) and the electronic unit (40, 122) being integrated in one component.

11. Apparatus according to Claim 10, having an electronic arithmetic unit (100) which is likewise integrated in the component.

12. System having an apparatus according to Claim 8, having a data bus, the memory device and the electronic unit (40, 122) being connected to one another via the data bus (22, 52, 124).

13. Computer program having program code means in order to carry out all of the steps of a method according to one of Claims 1 to 7 when the computer program is executed in a computer or a corresponding arithmetic unit (100, 121), in particular an electronic arithmetic unit (100, 121) according to Claim 11.

14. Computer program product having program code means which are stored on a computer-readable data storage medium in order to carry out a method according to one of Claims 1 to 7 when the computer program is executed in a computer or a corresponding arithmetic unit (100, 121).

**Revendications**

1. Procédé de transmission de données via un bus de données (22, 52, 124), entre une installation de mémoire (16, 106, 120) subdivisée en pages (82, 84, 128) et comprenant une première zone de mémorisation (110, 126) et une seconde zone de mémorisation (112, 130), et dont on peut accéder aux pages (82, 84, 128) à l'aide d'adresses physiques (78, 136, 138), et une unité électronique (40, 122) reliée à l'installation de mémoire (16, 106, 120) via le bus de données (22, 52, 124) et comprenant au moins une mémoire d'adresses (140, 142), la première zone de mémorisation (110, 126) étant prévue pour la mémorisation des données alors que la seconde zone de mémorisation (112 ; 130) contient les adresses physiques (78, 136, 138) des pages (82, 84, 128) de la première zone de mémorisation (110, 126),
**caractérisé en ce que**
la transmission des données se fait dans des blocs de données, et lors de la transmission de données d'un premier bloc de données, l'unité électronique transmet les adresses physiques nécessaires (78, 136, 138) pour un second bloc de données automatiquement depuis la seconde zone de mémorisation (112, 130) dans au moins une mémoire d'adresses (140, 142) de l'unité électronique (40, 122).

2. Procédé selon la revendication 1 selon lequel
une adresse de début (138) de la seconde zone de mémorisation (112, 130) est transmise à l'unité électronique (40, 122) au début de la transmission de données.

3. Procédé selon la revendication 1 ou 2 selon lequel
des données sont écrites de l'unité électronique (40, 122) dans l'installation de mémoire (16, 106, 120) lors de la transmission de données.

4. Procédé selon la revendication 1 ou 2 selon lequel
les données stockées en mémoire sont lues dans l'organe de mémoire (16, 106, 120) par l'unité électronique (40, 122) lors de la transmission de données.

5. Procédé selon l'une quelconque des revendications 1 à 4 selon lequel le bus de données (22, 52, 124) est un Bus PCI (22, 52, 124).

6. Procédé selon l'une quelconque des revendications 1 à 5 selon lequel l'installation de mémoire (16, 106, 120) est une mémoire centrale (16, 106, 120) sur une carte mère (110) d'une unité de calcul électronique (100, 121) avec comme unité électronique (40, 122) une carte d'extension (40, 122) insérée dans un emplacement enfichable (60) de la carte mère (110) .

7. Procédé selon l'une quelconque des revendications 1 à 6 selon lequel les adresses physiques (78, 136, 138) sont transmises sur l'unité électronique (40, 122) par transfert DMA.

8. Dispositif comportant une installation de mémoire et une unité électronique (40, 122) qui contient au moins une mémoire d'adresses (140, 142), dans lequel l'installation de mémoire est subdivisée en pages (82, 84, 128, 132) et comprend une première zone de mémorisation (110, 126) et une seconde zone de mémorisation (112, 130), la première zone de mémorisation (110, 126) est prévue pour les données alors que les adresses physiques (78, 136, 138) des pages (82, 84, 128) de la première zone de mémorisation (110, 126) sont stockées en mémoire dans la seconde zone de mémorisation (112, 130), l'installation de mémoire et l'unité électronique étant formés pour pouvoir accéder aux pages (82, 84, 128) à l'aide d'adresses physiques (78, 136, 138) et qu'ainsi des données soient transmises entre l'organe de mémoire et le dispositif électronique,

**caractérisé en ce que**

la transmission des données se fait dans des blocs de données, et lors de la transmission d'un premier bloc de données, l'unité électronique transmet automatiquement les adresses physiques nécessaires (78, 136, 138) pour un second bloc de données depuis la seconde zone de mémorisation (112, 130) dans au moins une mémoire d'adresses (140, 142) de l'unité électronique (40, 122).

9. Dispositif selon la revendication 8,

   **caractérisé en ce que**

   l'installation de mémoire (16, 106, 120) est une mémoire centrale (16, 106, 120) sur une carte mère (110) d'une unité de calcul électronique (100).

10. Dispositif selon la revendication 8, dans lequel

    l'installation de mémoire (16, 106, 120) et l'unité électronique (40, 122) sont intégrées dans un composant.

11. Dispositif selon la revendication 10,

    comportant une unité de calcul électronique (100) également intégrée dans le composant.

12. Système comportant un dispositif selon la revendication 8,

    comportant un bus de données, dans lequel l'installation de mémoire et l'unité électronique (40, 122) sont reliées entre elles par le bus de données (22, 52, 124).

13. Programme informatique, comportant des moyens de code de programme, pour mettre en oeuvre toutes les étapes d'un procédé selon l'une quelconque des revendications 1 à 7, quand le programme informatique est exécuté sur un ordinateur ou une unité de calcul correspondante (100, 121), en particulier une unité de calcul électronique (100, 121) selon la revendication 11.

14. Produit de programme informatique, comportant des moyens de code de programme mémorisés sur un support de données lisible par ordinateur, pour mettre en oeuvre un procédé selon l'une quelconque des revendications 1 à 7, quand le programme informatique est exécuté sur un ordinateur ou sur une unité de calcul correspondante (100, 121).

# FIG. 1

# FIG. 2

**FIG. 3**

**FIG. 4**

# FIG. 5

# FIG. 6